# EUROPEAN PATENT APPLICATION

(11) **EP 3 489 736 A1**
(43) Date of publication of application: **29.05.2019**
(21) Application number: 17752687.8
(22) Date of filing: 17.02.2017
(51) Int. Cl.: G02B 27/01, A42B 3/04

(54) **DISPLAY DEVICE WITH ADJUSTABLE ANGLE OF VIEW**

(30) Priority: 17.02.2016 CN 201610089094; 10.03.2016 CN 201610136537; 10.04.2016 CN 201620290552 U; 10.04.2016 CN 201620296245 U; 14.06.2016 CN 201620571052 U; 29.09.2016 CN 201610865122
(71) Applicant: Wang, Hao, Hangzhou, Zhejiang 310030 (CN)
(72) Inventor: Wang, Hao, Hangzhou, Zhejiang 310030 (CN)
(74) Representative: Boult Wade Tennant LLP
(86) International application number: PCT/CN2017/073873
(87) International publication number: WO 2017/140255

(57) **Abstract**

Disclosed is a display device with an adjustable angle of view, comprising a base portion, wherein a multi-linkage device at one end is disposed on the base portion and the display device is disposed on the other end. The problem of ageing of a flexible conduit and the problem of suitably matching the storage position of an external placed box after the use of the multi-linkage device are solved by using the multi-linkage device and by folding multiple linkages. In addition, the cooperation of the coarse and fine adjustments of the display device is achieved by the connection relationship between the various linkages and a user can quickly and conveniently adjust the display device to be at any angle by the structure. With an adjustment mechanism with a damping or post-adjustment locking mechanism, the display device can be positioned in an adjustment position convenient for viewing.

## Description

### FIELD OF THE INVENTION

The present invention relates to a display device with adjustable viewing angle.

### BACKGROUND

In the prior art, the display module on the thermal image helmet or the headband is connected to the thermal image capturing device through the video data line between the thermal image helmets or the headbands with the display module. In order to adjust the position between the display module and the helmet or the headband, they are often connected by a serpentine tube or a hard-connected structure. For the structure connected by a serpentine tube, there is a problem of easy aging of serpentine tube; in addition, after the use of the helmet, the serpentine tube has been adjusted, and even if subsequently adjusted for storage, the serpentine tube cannot be completely restored to the shape at the time of production, with the problem of no matching with the shape of the storage location of the box placed outside.

Although the hard-connected structure adopted solves the problem of matching the shape of storage location of the externally placed box, its adjustment position is restricted, unable to adapt to the needs for adjusting the angles and orientations of different users; in addition, the weight of the hard-connected structure imposes burden on users. At the same time, the thermal image device of the thermal image helmet or headband is often fixed on a helmet or headband by a mounting base, and its viewing angle is restricted by the wearing of the helmet.

In the prior art, the display modules include liquid crystal screens, various viewfinders, and a variety of micro-projection displays discovered in recent years. A micro-projection display includes, for example, a micro-projection module and a prism, the micro-projection module is used to project an image to the prism, and human eyes can see the images by observing the prism. There is a need for a solution that makes the display easier to use with the headset device.

### SUMMARY

In order to overcome the foregoing technical defects, the present invention provides a display device with adjustable viewing angle.

In order to solve the above technical problems, the present invention employs the following technical solutions.

A display device with adjustable viewing angle, comprising a base portion, one end of a multi-link mechanism is disposed on the base portion, and the other end is disposed with a display device.

Further, a first adjusting device is disposed between the multi-link mechanism and the base portion.

Further, a second adjusting device is disposed between the display module and the multi-link mechanism.

Further, the multi-link mechanism comprises a head link and a tail link, one end of the head link is disposed on the base portion by a first adjusting device, and the other end of the head link is movably connected to one end of the tail link, and the other end of the tail link is provided with the display device by a second adjusting device.

Further, the other end of the first adjusting device or the head link is connected to one end of the tail link by a hinge structure.

Further, the second adjusting device adopts a ball shaft structure.

Further, the ball shaft structure is a universal ball shaft structure.

Further, the head link is connected with the tail link through a link or a link group.

Further, a control button is disposed at the multi-link mechanism or at the display device.

Further, the device further comprises a thermal imager, and the base portion is disposed at the thermal imager.

Further, the device further comprises a spectacle frame, and the base portion is disposed at the spectacle frame.

Further, the base portion is provided with a snapping port.

Further, the base portion is connected to the thermal imager or the spectrum frame through a snap structure.

Further, the device further comprises an accommodating unit, and the base portion is disposed in the accommodating unit.

Further, the accommodating unit comprises an accommodating box, a baffle assembly disposed in the accommodating box, the baffle assembly comprises a top bead spring and a latching top bead disposed at the top of the top bead spring, and the multi-link mechanism cooperated therewith is provided with a card slot, and when accommodating, the latching top bead is snapped into the card slot.

Further, the accommodating unit further comprises a dialing component disposed on one side of the accommodating box, the dialing component comprises a dialing hand, a recovering spring, and a thimble, and the accommodating box is provided with a hole through which the thimble can pass, when dialing the dialing hand, the thimble passes through the hole of the accommodating box and then withstands the multi-link mechanism, so that the multi-link mechanism overcomes the elastic force of the latching top bead and then slides the latching top bead out of the card slot; after releasing the dialing hand, the recovering spring returns the dialing hand.

Further, a friction layer is provided on the surface of the tail link.

Further, a buffering component is disposed inside the accommodating unit.

Further, the device further comprises an accommodating groove, and the multi-link mechanism is accommodated in the accommodating groove.

Further, the accommodating unit is provided with a snap structure.

The present invention can achieve the following beneficial effects. Using a multi-link mechanism, the aging problem of the serpentine tube is solved by multi-link folding, and at the same time, the problem of matching with the storage location of the externally placed box can be adapted after use. In addition, through the connection relationship between the respective links, the coarse adjustment and the fine adjustment of the display device are matched, and users can quickly adjust any angle of the display device through the structure. The adjustment device with damping or the rear locking adjusting mechanism can position the display device in an easy-to-view adjustment position. Further, preferably, the display device with adjustable viewing angle is added with a matching accommodating unit at the periphery, and the multi-link mechanism is used to accommodate the display device, playing a protective role. The accommodating unit is provided with a baffle assembly and a dialing component to fix and release the multi-link mechanism respectively. The display device of the present invention can be applied to various wearable devices. It can be used with various application devices such as measuring devices, sensing devices, communication devices such as wireless or wired communication devices, for example, a capturing device such as infrared or visible light device and other sensing devices, etc.

### BRIEF DESCRIPTION OF THE DRAWINGS

FIG. 1 is an exploded view of a display device with a multi-link mechanism;
FIG. 2 is an assembly diagram of FIG. 1;
FIG. 3 is an exploded view of a display device with a multi-link mechanism having a thermal imager;
FIG. 4 is an assembly diagram of FIG. 3;
FIG. 5 is an exploded view of a display device with a multi-link mechanism according to another embodiment;
FIG. 6 is an assembly diagram of FIG. 5;
FIG. 7 is an exploded view of a display device with a multi-link mechanism having an accommodating unit;
FIG. 8 is an assembly diagram when used in FIG. 7;
FIG. 9 is an assembly diagram of the FIG. 7 in an accommodating state;
FIG. 10 is an exploded view of a display device with a multi-link mechanism having a thermal imager and an accommodating unit;
FIG. 11 is an assembly diagram of the FIG. 10 in an accommodating state;
FIG. 12 is an assembly diagram when used in FIG. 10;
FIG. 13 is an exploded view of a display device with a multi-link mechanism having a spectacle frame;
FIG. 14 is an assembly diagram of FIG. 13;
FIG. 15 is a display device with a multi-link mechanism having a spectacle frame and an accommodating unit;

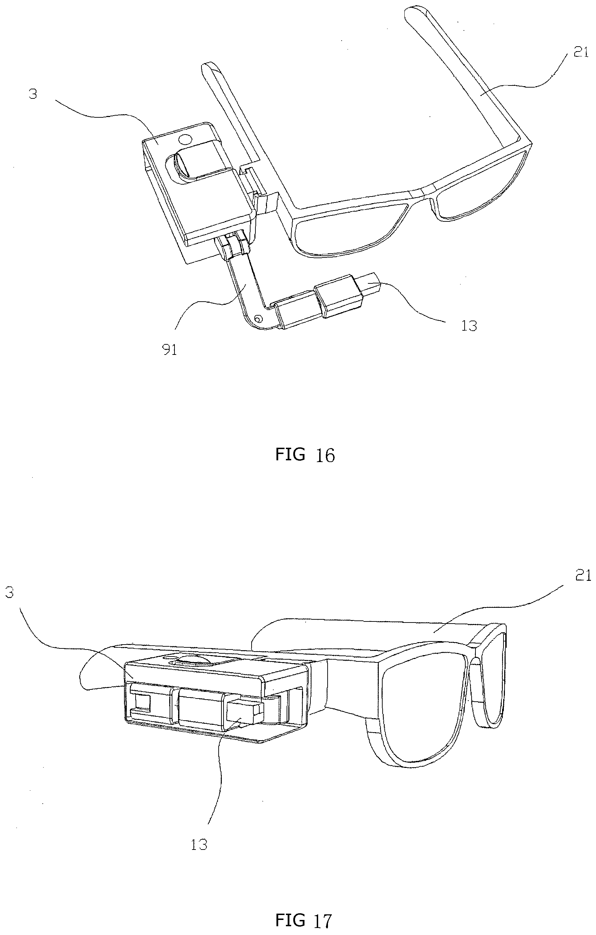

FIG. 16 is an assembly diagram when used in FIG. 15;
FIG. 17 is an assembly diagram of FIG. 15 in an accommodating state;
FIG. 18 is a structural diagram of a snap structure of a base portion according to an embodiment;
FIG. 19 is a structural diagram of a display device with a multi-link mechanism provided with a control button;
FIG. 20 is a structural diagram of a display device with a multi-link mechanism provided with a control button;
FIG. 21 is a structural diagram of a display device with a multi-link mechanism provided with a control button;
FIG. 22 is a structural diagram of a display device with a multi-link mechanism provided with a control button;
FIG. 23 is a structural diagram of a display device with a multi-link mechanism provided with a control button;
FIG. 24 shows another embodiment of a multi-link display device disposed on a helmet;
FIG. 25 shows another embodiment of a multi-link display device disposed on a helmet;
FIG. 26 shows a variety of shapes of a simple accommodating unit;
FIG. 27 is a schematic diagram of a display device with a multi-link mechanism having an accommodating unit mounted on a headband;
FIG. 28 is a schematic diagram of a display device with a multi-link mechanism having an accommodating unit mounted on a headband;
FIG. 29 is a schematic diagram of a display device with a multi-link mechanism having an accommodating unit mounted on a headband;
FIG. 30 is a schematic diagram of a display device with a multi-link mechanism mounted on a headband;
FIG. 31 shows an accommodating unit with a buffering component;
FIG. 32 is a schematic diagram of a display device with a multi-link mechanism having an accommodating unit mounted on a headband according to another embodiment;
FIG. 33 is a schematic diagram of a display device with a multi-link mechanism having an accommodating unit mounted on a headband according to another embodiment;
FIG. 34 is a schematic diagram of a multi-link mechanism in FIG. 33;
FIG. 35 is an exploded view of a multi-link mechanism in FIG. 34;
FIG. 36 is an installation schematic diagram of a display device with a multi-link mechanism having an accommodating unit in FIG. 33.
FIG. 37 is a schematic diagram of a display device with a multi-link mechanism provided with an accommodating groove at a headband;
FIG. 38 is an expanded view of a display device with a multi-link mechanism in FIG. 37;
FIG. 39 is an exploded view of a display device with a multi-link mechanism provided with an accommodating groove at a headband in FIG. 37;
FIG. 40 is another schematic diagram of a display device with a multi-link mechanism provided with an accommodating groove at a headband;
FIG. 41 is an expanded view of a display device with a multi-link mechanism in FIG. 40;
FIG. 42 is a schematic diagram showing a capturing device and a power module on both sides of a headband in FIG.37;
FIG. 43 is another installation diagram of display device with a multi-link mechanism having an accommodating unit;
FIG. 44 is a schematic diagram of FIG. 43 in the expanding process;
FIG. 45 is a schematic diagram of FIG. 44 after fully expanded;
FIG. 46 is an exploded view of a display device with a multi-link mechanism in FIG. 43;
FIG. 47 is a structure of an accommodating unit with an accommodating groove in FIG.43;
FIG. 48 is a schematic diagram of FIG. 47 after expanded;
FIG. 49 is a schematic diagram of a capturing display device with a multi-link mechanism having an accommodating unit.

### DETAILED DESCRIPTION

The present invention is further described in combination with drawings and specific embodiments.

### Example 1

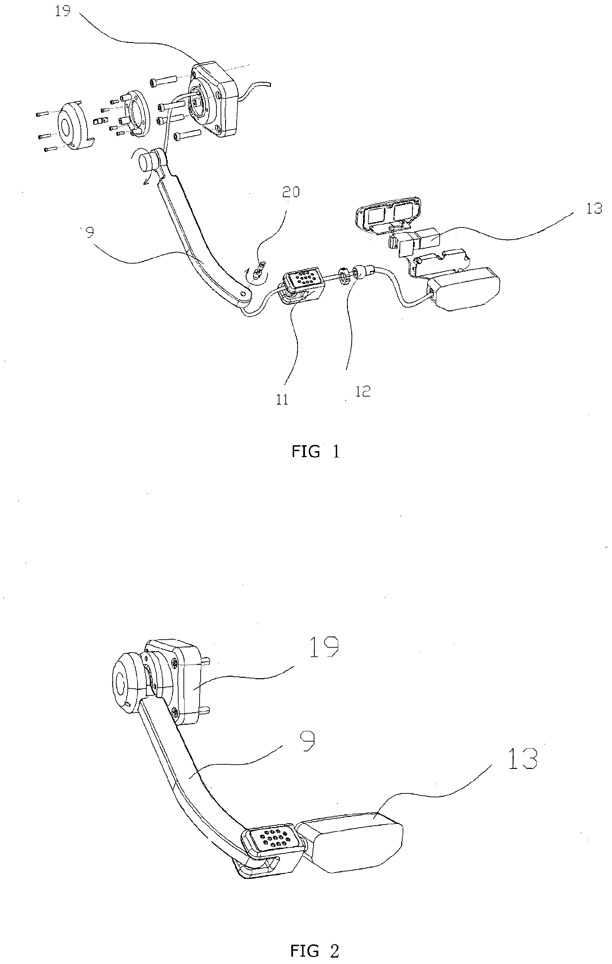

As shown in FIG. 1 and FIG. 2, a display device with an adjustable viewing angle comprises a base portion 19. One end of the multi-link mechanism is disposed on the base portion 19 by a first adjusting device, and the first adjusting device adopts a rotating shaft structure. Preferably, an adjusting mechanism with damping is used, for example, a laterally disposed damped "-" shaped rotating shaft structure. The first adjusting device can be used to adjust the display device 13 up and down. A mounting cover is disposed on the outer side of the base portion 19, and the mounting cover wraps the "-" shaft structure. The other end of the multi-link mechanism is provided with a display device 13 as a display module through a second adjusting device 12. In this embodiment, a micro-projection display device is adopted for convenient carrying and light weight design. The adjusting device can be an adjusting mechanism with a damping or rear locking adjusting mechanism, to position the display device in an easy-to-view adjusting position.

The second adjusting device 12 is used to achieve fine adjustment of the angle of the display device 13, and preferably, the second adjusting device 12 employs an adjustment mechanism with damping, such as a universal ball shaft device with damping. Preferably, a universal ball shaft device with a rotation limit can be used to avoid damage to the internal wires caused by excessive rotation. The video data cables of the display device 13 are placed inside the multi-link mechanism so that it is not exposed outside, so that it is beautiful and prevents accidental damage to the data cables. In other embodiments, the data cables can also be placed outside of the linkage.

In this embodiment, the multi-link mechanism is a two-link structure. The head link 9 of the two-link structure is in an arc design, and the arc curvature can be designed to match the curvature of the surface of the helmet or headband. The head link 9 adopts a snap-type structure, with hollow inside, to pass the data cables or power cables; the snap-type structure also facilitates to open the data cables of the head link 9 when the function module is subsequently repaired or expanded. One end of the head link 9 of the two-link structure is disposed on the base portion 19 by a first adjusting device; the tail link 11 has a concave design, and the other end of the head link 9 of the two-link structure is connected with one end of the tail link 11 through a rotating shaft structure, for example, a vertically damped "-"shaped rotating shaft structure 20. At this time, the joint is disposed in the concave portion of the tail link 11, by adjusting the "-"shaped shaft structure 20, the display device 13 can be adjusted back and forth. The other end of the tail link 11 is provided with the display device 13 through the universal ball shaft, to facilitate fine adjustment of the display device 13.

In order to facilitate users to adjust the multi-link mechanism, a friction layer is arranged on the surface of the tail link 11. Users can link the head link 9 of two-link structure to achieve the adjustment of the display device 13 up and down, back and forth as long as they hold the tail link 11.

The base portion 19 is not a separate independent component. When the multi-link mechanism is disposed in an external device by a first adjusting device, for example, a helmet or a headband or other headset devices, a portion of the contact area for disposing the first adjusting device in the helmet or headband may be a base portion 19, at this time, the helmet or headband surface is integrally formed with the base portion 19 or separately formed but combined and assembled.

### Example 2

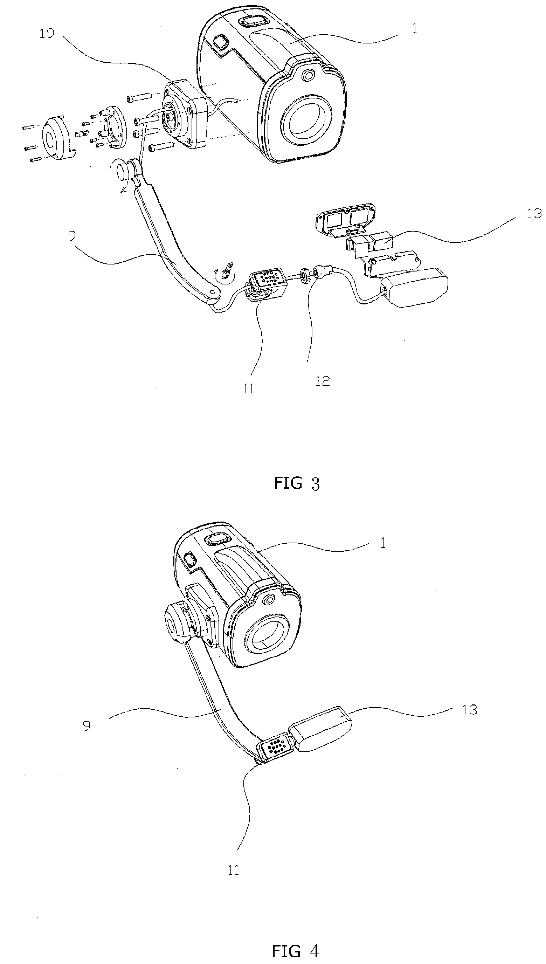

As shown in FIG. 3 and FIG. 4, the base portion 19 is fixed at the thermal imager 1 so that the content of the thermal imager can be displayed by the display device 13. In this embodiment, the first adjusting device can be directly disposed at the side of the thermal imager 1 when delivered from a factory, and the area of the side of the thermal imager 1that is in contact with the first adjusting device may be a base portion 19. Apparently, the thermal imager 1 may also be configured as other capturing device, for example, a visible light capturing device, etc.

### Example 3

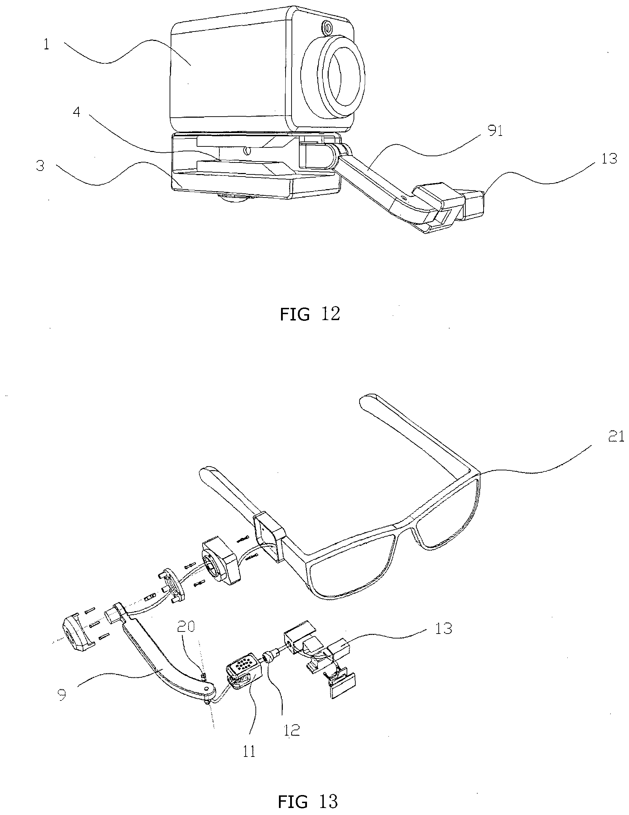

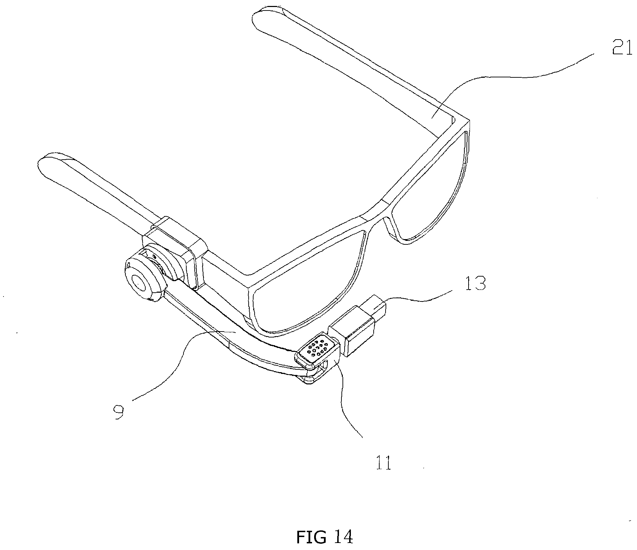

As shown in FIG.13 and FIG.14, the base portion 19 is fixed at the spectacle frame 21, so that users can adjust the display device 13 to view the contents.

### Example 4

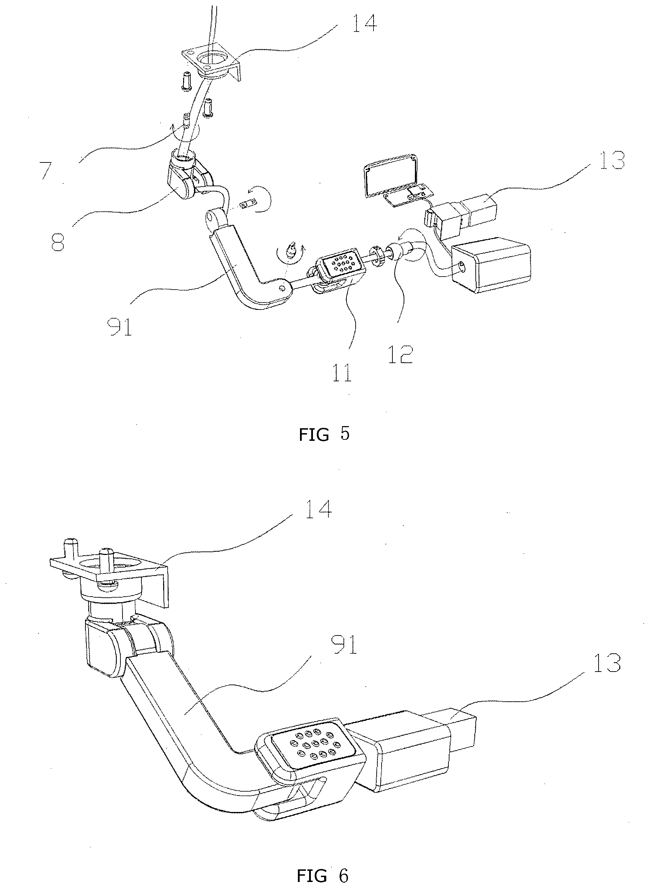

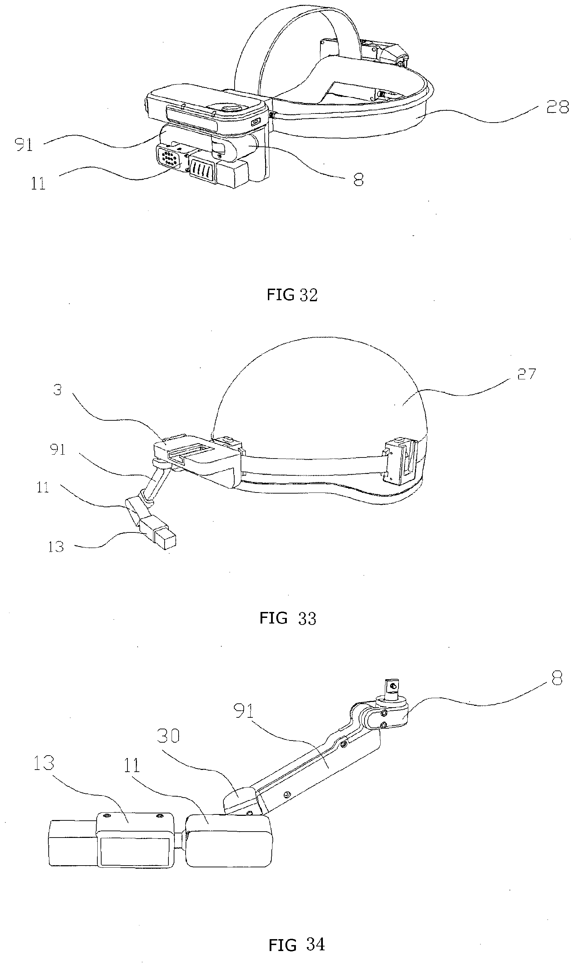

As shown in FIG.5, FIG.6, FIG.24, and FIG.25, it is a display device of another kind of link structure. A capturing device 1 is disposed at the helmet 27. The capturing device 1 is connected with the display device of the link structure by wiring or plugging for data communication. In other preferred embodiments, the capturing device 1 and the display device may be a whole or divided into two separate components. When they are two separate shooting components, they may be mounted on both sides of the headset device respectively, making wearing more balanced, as shown in FIG.32.

The display device of the link structure comprises a multi-link type base portion 14, and one end of the multi-link mechanism is disposed on the multi-link type base portion 14 by a first adjusting device 7, and the first adjusting device 7 adopts a rotating shaft structure, preferably an adjusting mechanism with damping, for example, a damped "-"shaped rotating shaft structure disposed vertically. The first adjusting device 7 can be used for the fast adjustment of the display module leftwards and rightwards. The other end of the multi-link mechanism is provided with a display device 13 as a display module by the second adjusting device 12. The display device 13 adopts a micro-projection display device for the convenience of carrying and light design. Preferably, the adjusting device adopts an adjusting mechanism with a damping or rear locking adjusting mechanism, to position the display device in an adjustable position for easy observation.

The second adjusting device 12 is used to achieve the fine adjustment of the angle of the display device 13, preferably, the second adjusting device 12 adopts a universal ball shaft device. The video data cables of the display device 13 are placed inside the multi-link mechanism so that they are not exposed outside, and they are aesthetic and prevent accidental damage to the data cables.

As shown in FIG. 5 and FIG. 6, the multi-link mechanism is a three-link structure, the head link 8 of the three-link structure adopts a concave design, and one end of the head link 8 of the three-link structure is disposed on the multi-link type base portion 14 through a first adjusting device 7, and the other end of the head link 8 of the three-link structure is connected to the intermediate link 91 by an adjusting device, for example, a lateral damped "-"shaped rotating shaft structure. Through adjusting the "-"shaped shaft structure, the display device 13 is quickly adjusted up and down. The intermediate link 91 has an arc design which can be designed to substantially conform to the arc shape of the surface of the helmet, or the intermediate link 91 has an L-shaped design, and the intermediate link 91 can have a hollow structure, for example, a snap-type can be adopted. The structure is hollow inside and is used to pass the data cables or power cables; the snap-type structure also facilitates to open the data cables of the intermediate link 91 when the function module is subsequently repaired or expanded. The other end of the intermediate link 91 is connected with one end of the tail link 11 through an adjusting device, for example, a damped "-"shaped rotating shaft structure. Preferably, a damped "-"shaped rotating shaft structure is used. Preferably, a vertically damped "-"shaped rotating shaft structure is used for adjusting the display device 13 quickly back and forth. The other end of the tail link 11 is disposed with a display device 13 by a second adjusting device 12.

In order to facilitate users to adjust the multi-link mechanism, a friction layer is arranged on the surface of the tail link 11. Users can link the head link 8 and intermediate link 91 of the three-link structure by holding the tail link 11 or the display device 13, to achieve the quick adjustment leftwards and rightwards, up and down, and back and forth.

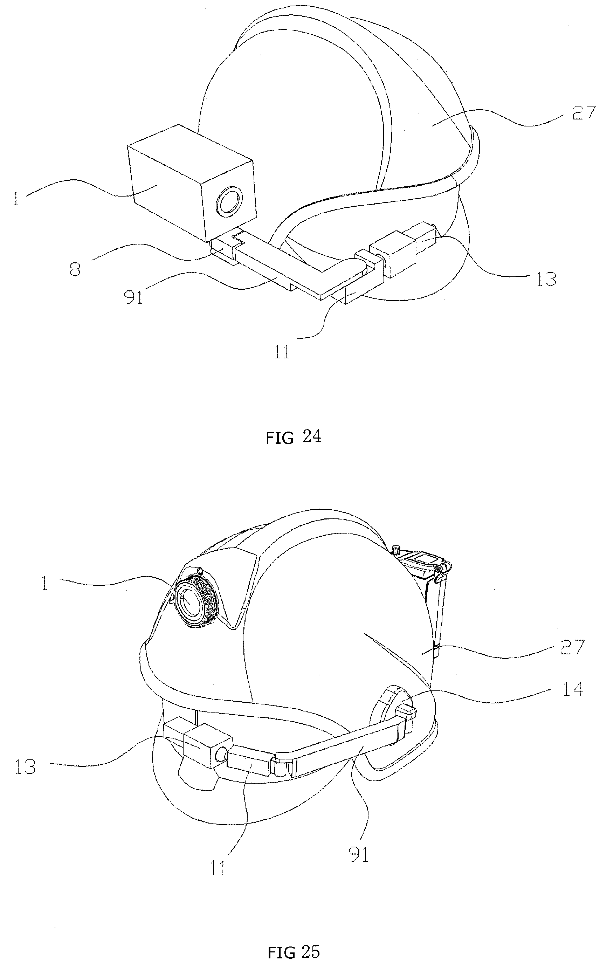

As shown in FIG. 24 and FIG. 25, the multi-link mechanism is also a three-link structure. The adjustment mode and linkage principle are the same as those of FIG. 5 and FIG. 6. The difference is that the shape of each link is different, which is relatively simple compared to the link components shown in FIG.5 and FIG.6, FIG.24 or FIG.25.

By analogy of the first embodiment and the fourth embodiment, those skilled in the art can understand that the multi-link mechanism can also adopt more link assembly modes, for example, the intermediate link can be a single-link or a multi-link mechanism, to achieve the technical problems to be solved in the present invention.

### Example 5

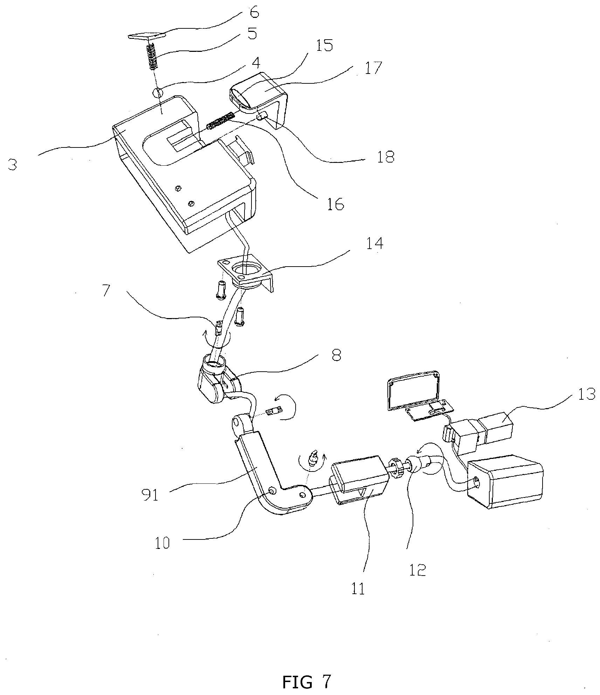

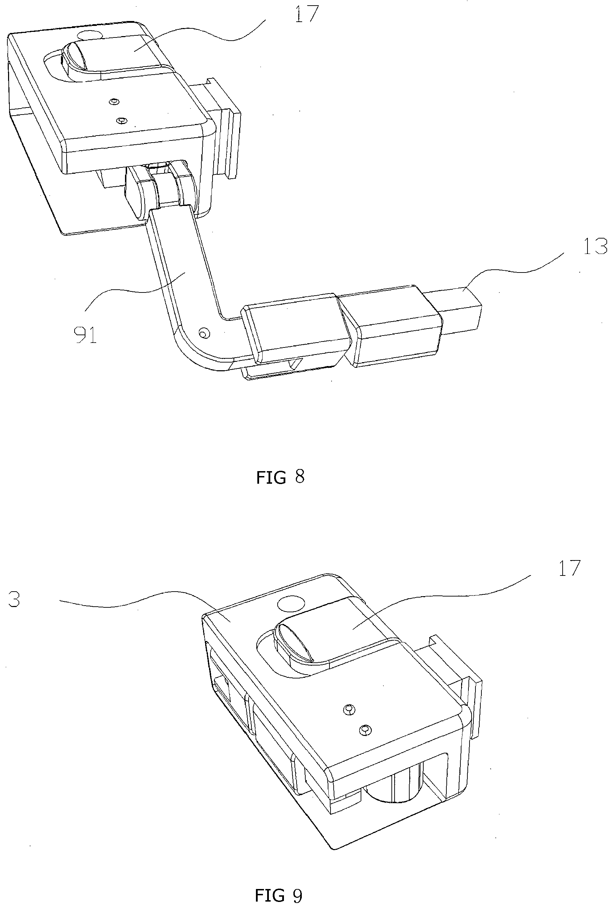

As shown in FIG. 7∼FIG.9, an accommodating unit is added for accommodating the display device 13 on the basis of FIG.5, in addition, a snapping port is provided at the accommodating unit.

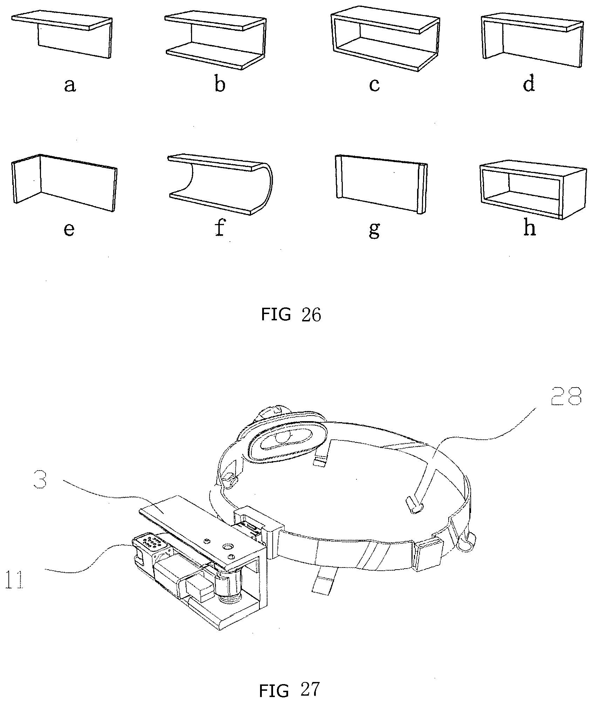

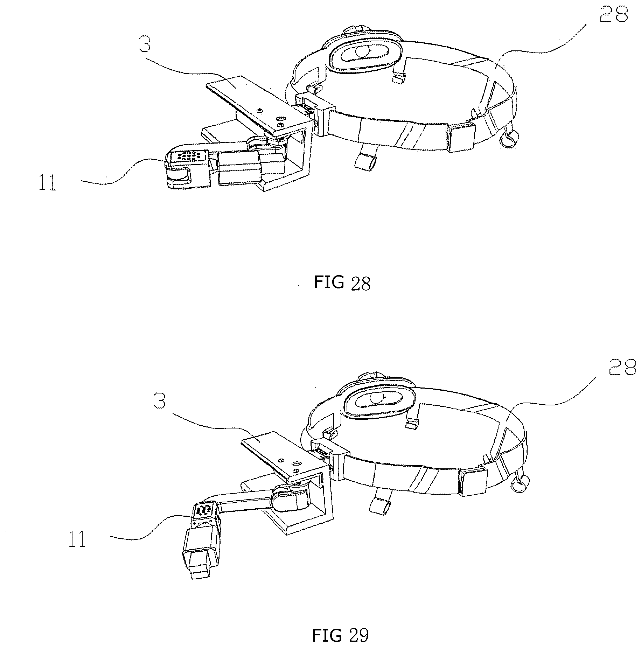

As shown in FIG.26a∼26h, a simple accommodating unit can be designed into the above shape. Preferably, the simple accommodating unit adopts a concave shape as shown in FIG.26b and a concave arc shape as shown in FIG.26f. FIG.27 to FIG.30 show that the display device is accommodated in a concave accommodating unit in FIG.26b.

As shown in FIG. 7∼FIG.9, one end of the link device is disposed in the accommodating unit 3 through a link type base portion 14, the accommodating unit comprises an accommodating box 3, and a baffle assembly disposed in the accommodating box, the baffle assembly comprises a top bead spring 5 and a latching top bead 4 disposed at the top of the top bead spring, the top bead spring 5 is disposed at the spring baffle 6. Under the action of the top bead spring 5, a part of the latching top bead 4 protrudes in the hole 2 of the accommodating box 3. The multi-link mechanism that matches with the hole 2 is provided with a card slot 10, so that the latching top bead 4 is snapped into the card slot 10 when accommodated.

In order to facilitate the release of the multi-link mechanism, the accommodating unit further comprises a dialing component 17 disposed on one side of the accommodating box, the dialing component comprises a dialing hand 15, a recovering spring 16 and a thimble 18, and the accommodating box is provided with a hole through which the thimble can pass, when dialing the dialing hand 15, the thimble 18 passes through the hole of the accommodating box and then withstands the multi-link mechanism, so that the multi-link mechanism overcomes the elastic force of the latching top bead 4 and then slides the latching top bead out of the card slot; after releasing the dialing hand, the recovering spring 16 returns the dialing hand 15.

Similarly, the link type base portion 14 is not a separate independent component. When the link device is directly disposed in the accommodating unit by the first adjusting device, the contact area of the first adjusting device on the inner surface of the accommodating unit can be a link type base portion 14, at this time, the inner surface of the accommodating unit is integrally formed with the link type base portion 14 or separately formed but combined and assembled.

### Example 6

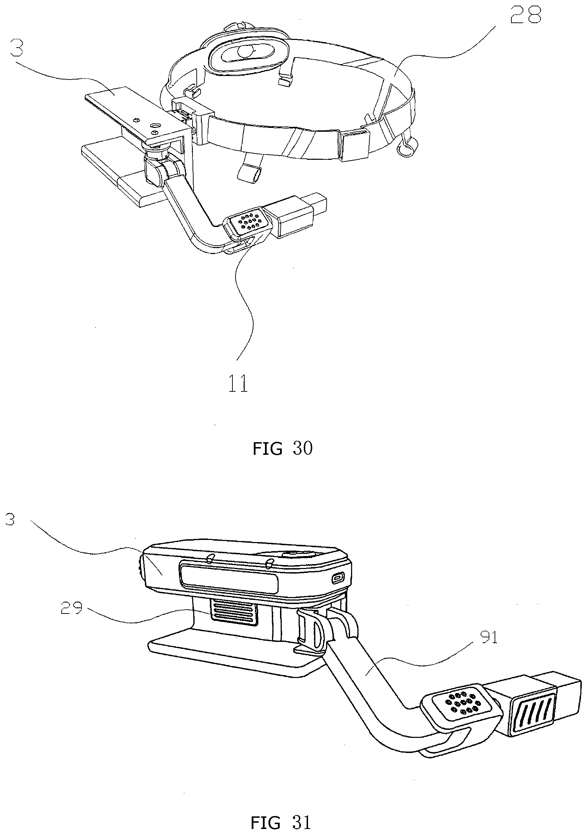

As shown in FIG. 31, on the basis of FIG.7∼FIG.9, an additional buffering component 29 can be disposed on the inner side of the accommodating unit. When the multi-link mechanism is placed in the accommodating unit, it plays a role of protection.

### Example 7

As shown in FIG. 32, it is another embodiment when the multi-link mechanism is disposed in the inner wall of the accommodating unit. In the embodiment, a thermal image capturing device is disposed on one side of the headband, and a display device with an accommodating unit is disposed on the other side. With this setting, the weight of two components is balanced, avoiding the problem of varying weight on both sides. The thermal image capturing device and the display device can be directly connected by wires or through wires with connectors.

At this time, the head link 8 of the three-link structure is directly mounted on the inner wall of the accommodating unit. In fact, the multi-link type base portion 14 and the inner wall of the accommodating unit are integrated, and the first adjusting device of the head link 8 of the three-link structure is in the contact area of the inner wall of the accommodating unit, actually it is a multi-link type base portion 14.

### Example 8

As shown in FIGS.33∼36, the multi-link mechanism is disposed at the top of the accommodating unit, the multi-link mechanism is a three-link structure. The head link 8 of the three-link structure adopts a concave design. One end of the head link 8 of the three-link structure is disposed on the top wall of the accommodating unit by the first adjusting device 7. Actually the multi-link type base portion 14 and the top wall of the accommodating unit are integrated. The first adjusting device of the head link 8 of the three-link structure is in the contact area of the top wall of the accommodating unit, which is actually a multi-link type base portion 14. The other end of the head link 8 of the three-link structure is connected to one end of the intermediate link 91 via a lateral damped "-"shaped rotating shaft structure. Through adjusting the "-"shaped shaft structure, the display device 13 is quickly adjusted up and down. The intermediate link 91 adopts a snap-on nut fixation structure. The structure is hollow inside and is used to pass the data cables or power cables. The snap-type structure also facilitates to open the data cables of the intermediate link 91 when the function module is subsequently repaired or expanded. The intermediate link is stabilized by fixing with a nut after snapping. The other end of the intermediate link 91 is connected with one end of the tail link 11 through a joint member 30. A rotating shaft is provided between the joint member 30 and the intermediate link 91. Preferably, a damped "-"shaped rotating shaft structure is used for adjusting the display device 13 quickly back and forth. The other end of the tail link 11 is disposed with a display device 13 by a second adjusting device 12.

Users can link the head link 8 and intermediate link 91 of the three-link structure by holding the tail link 11 or the display device 13, to achieve the quick adjustment leftwards and rightwards, up and down, and back and forth.

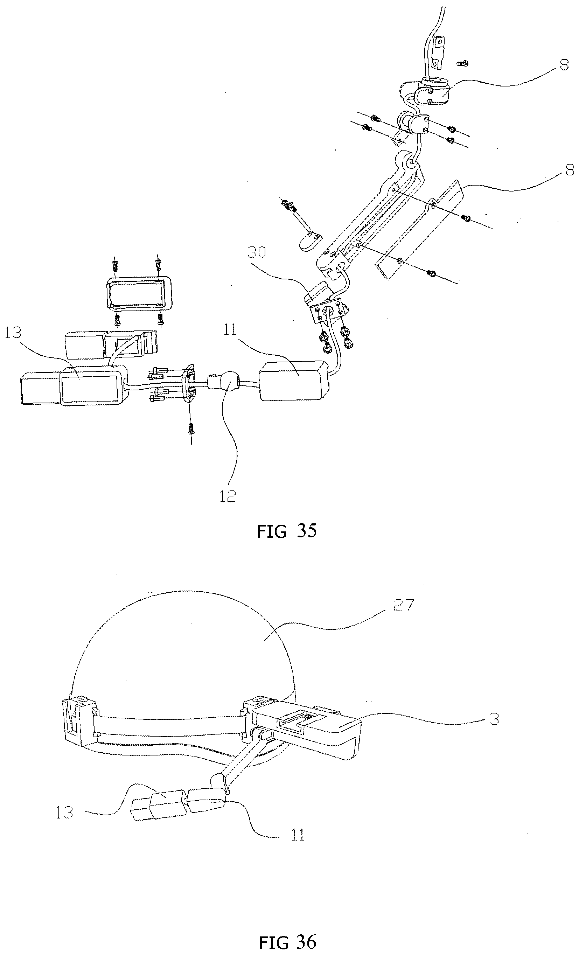

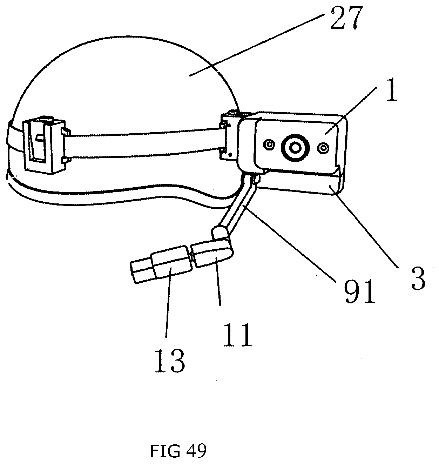

As shown in FIG. 49, it differs from the structure in FIG. 36 in that it can be provided with various application devices, such as a measuring device, a sensing device, etc. Preferably, a capturing device such as a thermal imager 1 can be provided.

In addition, in FIG.33 and FIG.49, the mounting base of the accommodating unit or the display device has a buckle that matches the card slot of the headset device, which facilitates the flexible installation of the display device in the positions with card slots such as the front and side of the headset device, etc.

### Example 9

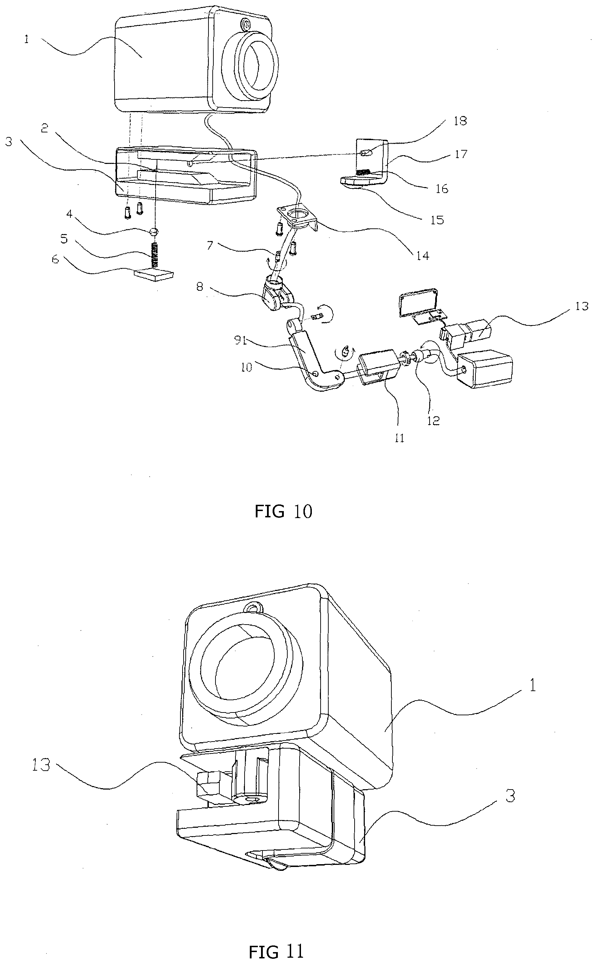

As shown in FIG. 10∼FIG.12, a capturing device such as a thermal imager 1, is provided at the top of the accommodating unit 3, and the display device 13 is used to display the content of the thermal imager 1.

### Example 10

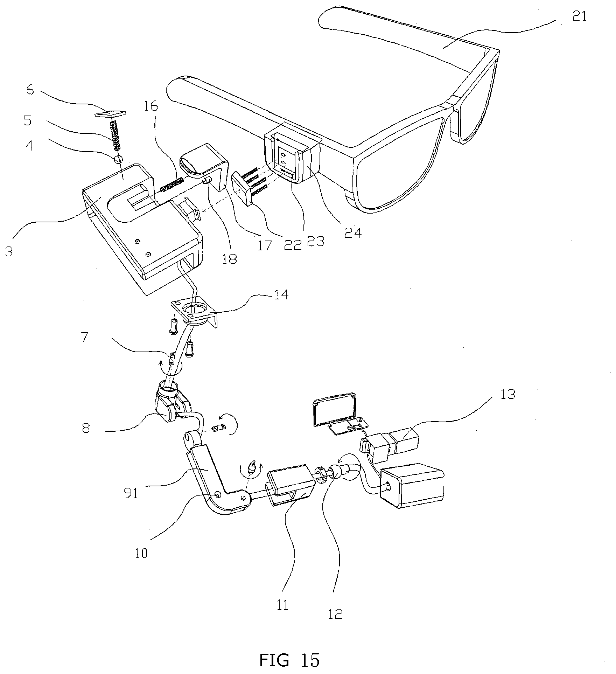

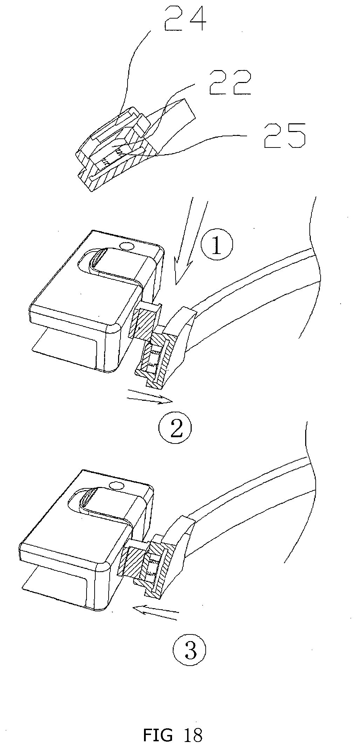

In order to realize the convenient disconnection of the accommodating unit 3 and the external device, the accommodating unit 3 and the external device can be connected through a snapping device, as shown in FIG.15∼FIG.18, the external device is a spectacle frame. A buckle is disposed on one side of the accommodating unit 3, and a matching card slot 24 is disposed at the spectacle frame. An electrical contact 23 is provided at the bottom of the card slot 24. Stepped chutes are provided on both sides of the card slot 24, and a pressing block 22 is disposed on the inner side of the card slot, and the buckle is inserted into the bottom of the card slot along the chute, and the pressing block 22 presses the buckle under the action of the spring 25. The buckle is snapped in the card slot 24 through the pressing block 22 and the steps of the chute.

### Example 11

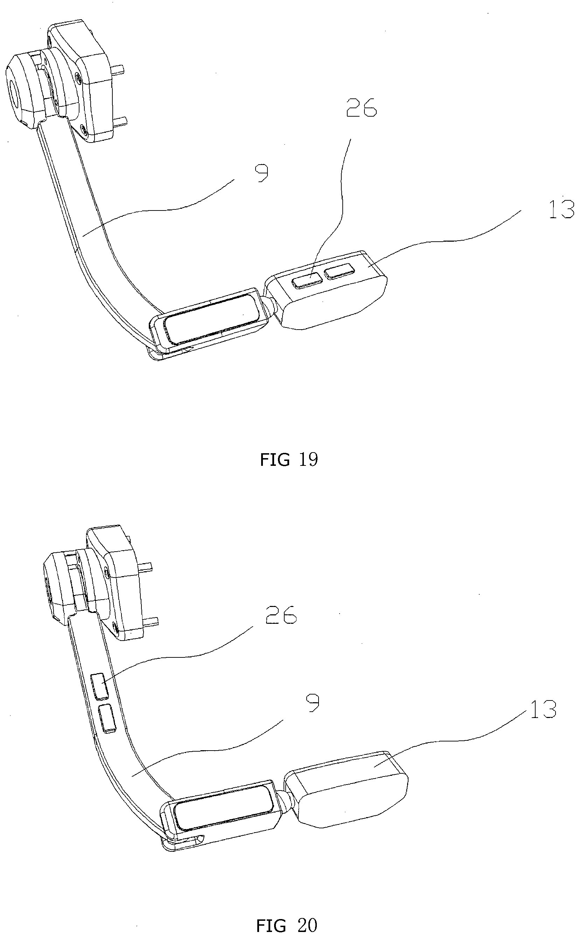

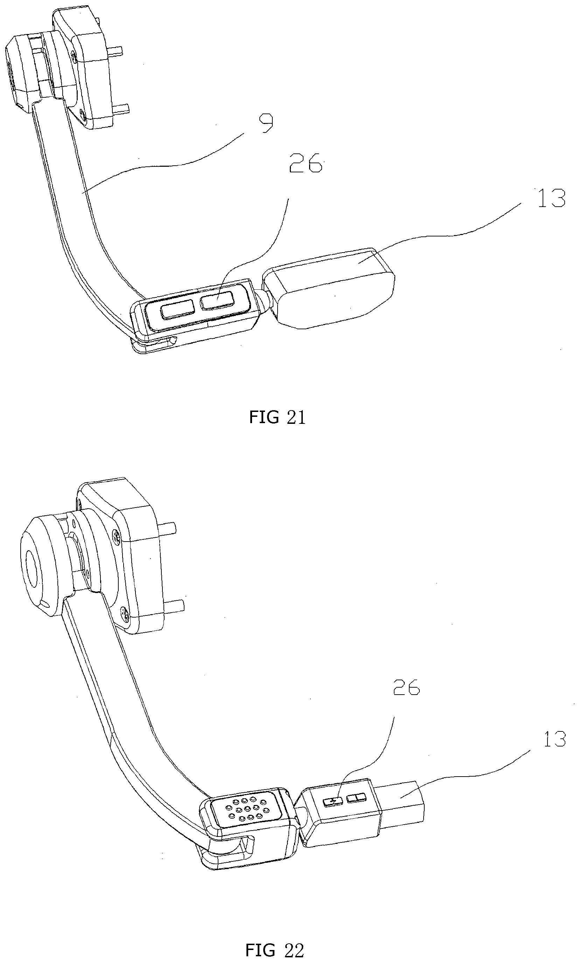

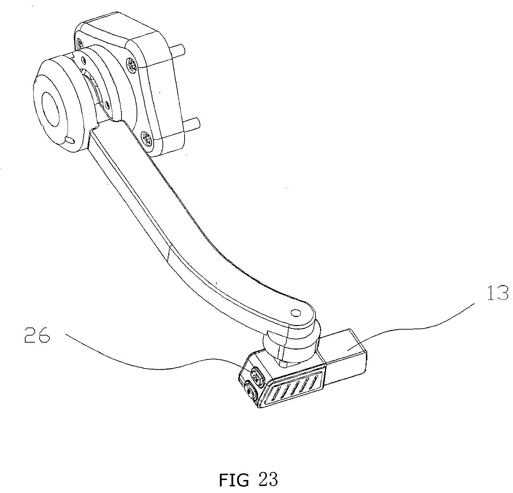

As shown in FIG. 19∼FIG.23, a control button 26 is disposed in a display device with adjustable viewing angle for controlling the display device 13, as shown in FIG. 19, FIG. 22 or FIG. 23, the control button 26 can be disposed at the shell of the display device 13; or can be disposed at the multi-link mechanism, as shown in FIG. 20 and FIG.21.

### Example 12

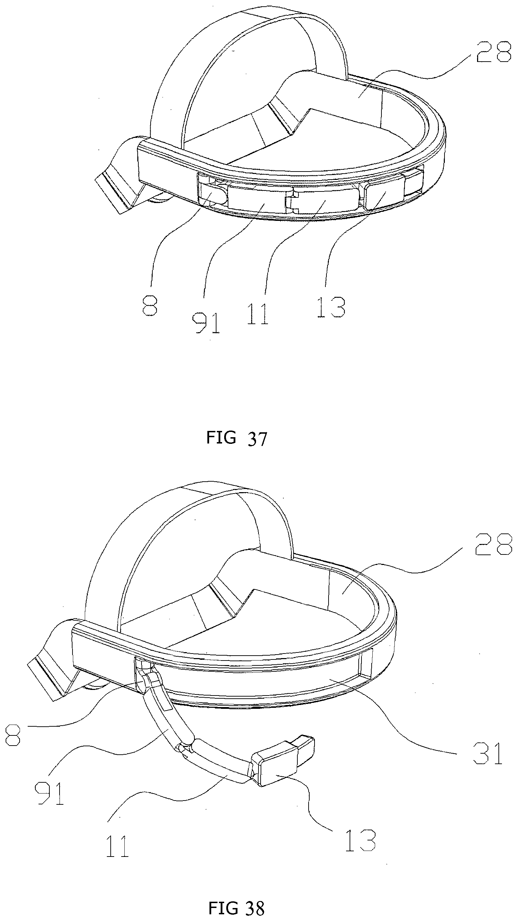

As shown in FIG. 37∼39, a display device with a multi-link mechanism having an accommodating groove is embedded in the headband.

An accommodating groove 31 is embedded in the headband, and the intermediate link 91 and the tail link 11 are both provided with a certain degree of curvature. The curvature of the accommodating groove 31 matches the curvature of the intermediate link 91 and the tail link 11. A notch is provided at one side of the accommodating groove, which is used to dispose a multi-link type base portion 14.

The multi-link mechanism is a three-link structure. The head link 8 of the three-link structure adopts a concave design. One end of the head link 8 of the three-link structure is disposed on the multi-link type base portion 14 by the first adjusting device 7. The other end of the head link 8 of the three-link structure is connected to one end of the intermediate link 91 via a lateral damped "-"shaped rotating shaft structure. Through adjusting the "-"shaped shaft structure, the display device 13 is quickly adjusted up and down. The intermediate link 91 adopts an arc design, with an arc curvature matching with that of the accommodating groove 31. The intermediate link 91 adopts a snap-type structure. The structure is hollow inside and is used to pass the data cables or power cables. The snap-type structure also facilitates to open the data cables of the intermediate link 91 when the function module is subsequently repaired or expanded. The other end of the intermediate link 91 is connected with one end of the tail link 11 through a vertically damped "-"shaped rotating shaft structure. The damped "-"shaped rotating shaft structure is used for adjusting the display device 13 quickly back and forth. The other end of the tail link 11 is disposed with a display device 13 by a second adjusting device 12. The second adjusting device 12 is used to achieve the fine adjustment of the angle of the display device 13, preferably, the second adjusting device 12 adopts a universal ball shaft device.

### Example 13

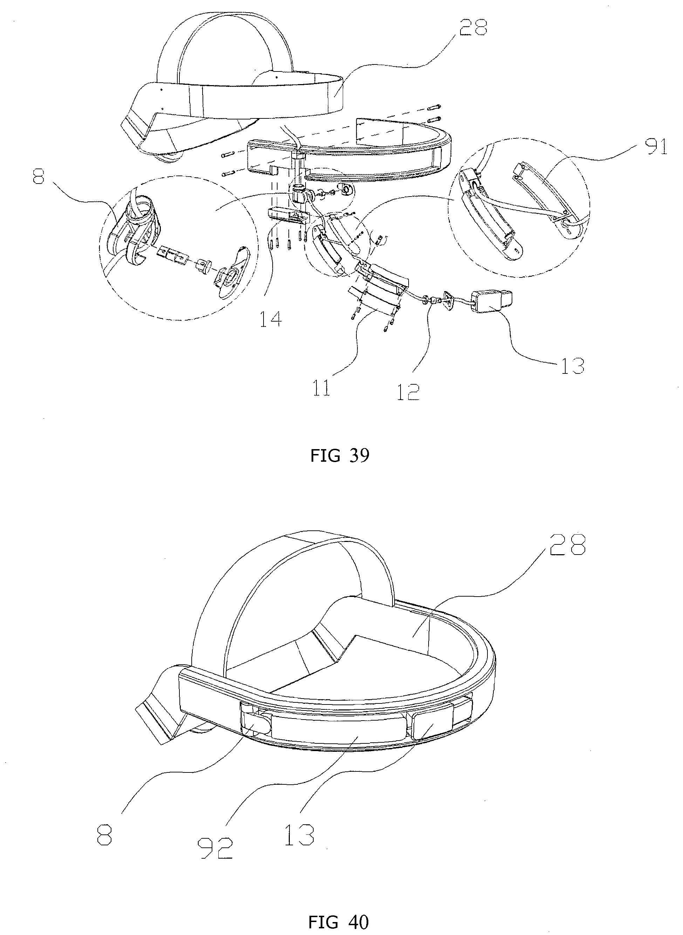

As shown in FIG. 40∼41, it is another structural diagram of display device with a multi-link mechanism having an accommodating groove at the headband.

The difference from the twelfth embodiment in this embodiment is that the multi-link mechanism is a two-link structure, the second link 92 has a certain curvature, and the curvature of the accommodating groove31 is matched with the curvature of the second link 92. A notch is provided at one side of the accommodating groove, which is used to dispose the multi-link type base portion 14.

The head link 8 of the two-link structure adopts a concave design. One end of the head link 8 is disposed on the multi-link type base portion 14 by the first adjusting device 7. The other end of the head link 8 is connected to one end of the second link 92 via a lateral damped "-"shaped rotating shaft structure. Through adjusting the "-"shaped shaft structure, the display device 13 is quickly adjusted up and down. The second link 92 adopts an arc design, with an arc curvature consistent with that of the accommodating groove 31. The second link 92 adopts a snap-type structure. The structure is hollow inside and is used to pass the data cables or power cables. The snap-type structure also facilitates to open the data cables of the second link 92 when the function module is subsequently repaired or expanded. The other end of the second link 92 is disposed on the display device 13 by a second adjusting device 12. The second adjusting device 12 is used to achieve the fine adjustment of the angle of the display device 13, preferably, the second adjusting device 12 adopts a universal ball shaft device.

### Example 14

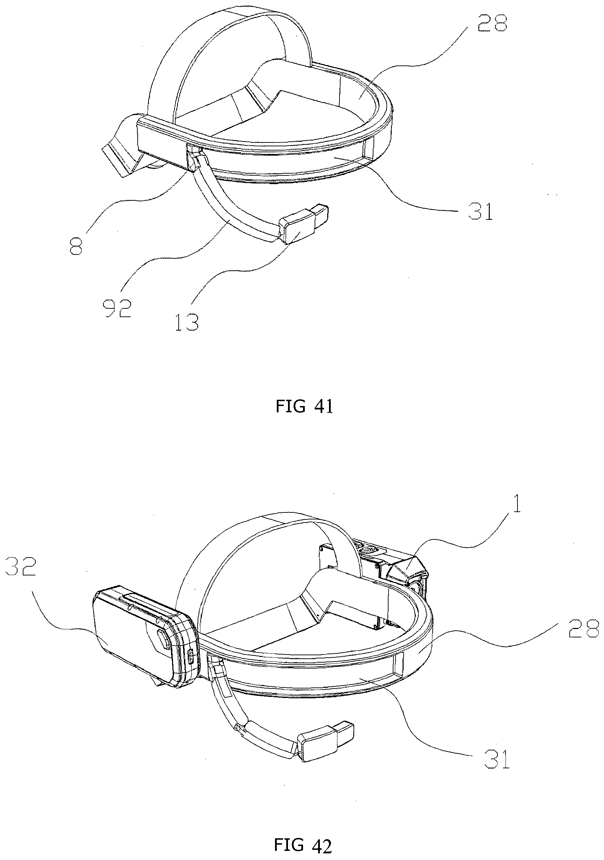

As shown in FIG. 42, in this embodiment, a capturing device is provided at one side of the headband in the Example 12, for example, a thermal image capturing device, and a power module is provided on the other side. The display device is directly connected or plugged with the thermal image capturing device and the power module. With this setting, the weights of the two parts can be balanced.

### Example 15

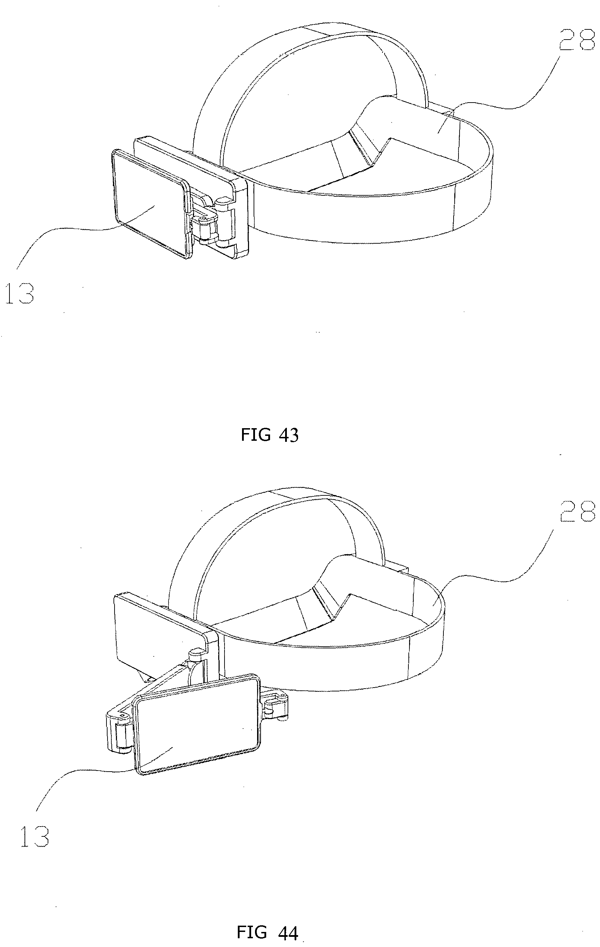

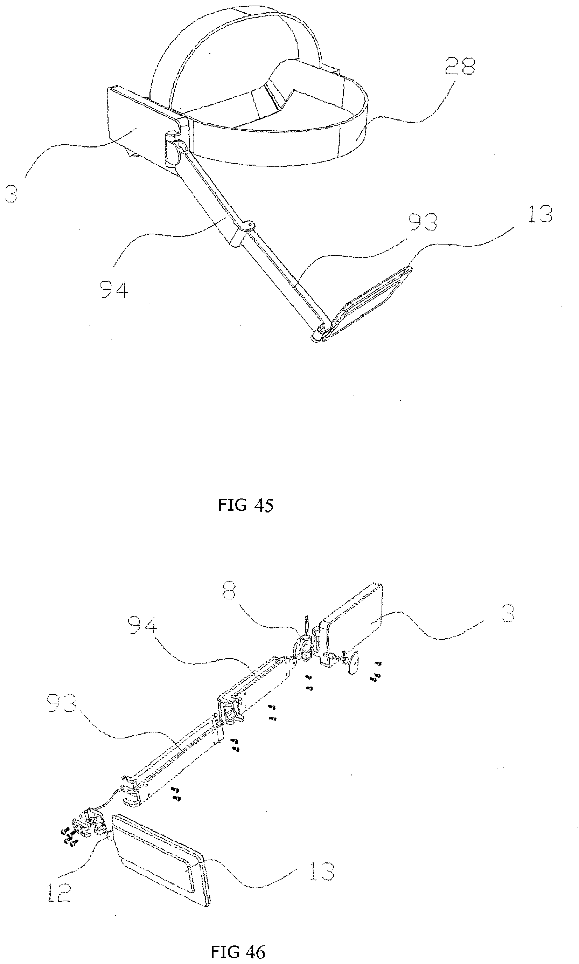

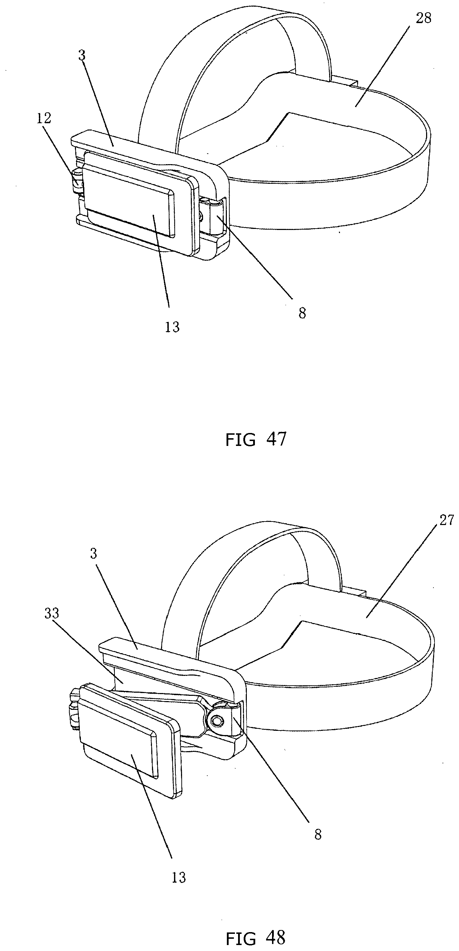

As shown in FIG. 43∼FIG.46, in this embodiment, the multi-link mechanism is a three-link structure, which adopts a folded shape, the accommodating unit 3 is an accommodating board. One end of the head link 8 of the three-link structure is disposed on the accommodating board by a first adjusting device 7, at this time, the multi-link type base portion is integrated with the accommodating board, namely, the contact place between the first adjusting device 7 and the accommodating board. For example, as shown in FIGS. 47∼48, in order to prevent the display device from being squeezed laterally, the edge of the accommodating board is provided with a protruding protection display device. An accommodating groove 33 can be provided at the accommodating board for accommodating the link structure.

The other end of the head link 8 of the three-link structure is connected to the intermediate link 94 by a lateral damped "-"shaped rotating shaft structure. Through adjusting the "-"shaped shaft structure, the display device 13 is quickly adjusted up and down. The intermediate link 94 adopts a snap-type structure. The structure is hollow inside and is used to pass the data cables or power cables; the snap-type structure also facilitates to open the data cables of the intermediate link 94 when the function module is subsequently repaired or expanded. The other end of the intermediate link 94 is connected with one end of the tail link 93 through a vertical rotating shaft structure. The damped rotating shaft structure is used for adjusting the display device 13 quickly back and forth. The other end of the tail link 93 is disposed with a display device 13 by a second adjusting device 12. The second adjusting device 12 is used to achieve the fine adjustment of the angle of the display device 13, preferably, the second adjusting device 12 adopts a universal ball shaft device. In this embodiment, the tail link 93 and the second adjusting device 12 are also provided with a rotating shaft.

Further, in the foregoing embodiment, a single link in the multi-link mechanism may be replaced with another component such as a serpentine tube; in addition, a single link in the multi-link mechanism and the connected adjusting device may be replaced with a deformable part.

The foregoing description is only a preferred embodiment of the present invention. It should be noted that the definitions of the various component nouns in the present invention are merely for convenience of explanation. In actual cases, there are cases where the functions and structures are the same or similar, but the names are inconsistent. It will be apparent to those skilled in the art that various modifications and improvements can be made without departing from the concept of the invention, and those modifications and improvements shall fall within the scope of protection of the present invention.

## Claims

1. A display device with adjustable viewing angle, comprising: a base portion, one end of a multi-link mechanism is disposed on the base portion, and the other end is disposed with a display device.

2. The display device with adjustable viewing angle according to claim 1, wherein: a first adjusting device is disposed between the multi-link mechanism and the base portion;.

3. The display device with adjustable viewing angle according to claim 2, wherein a second adjusting device is disposed between the display module and the multi-link mechanism.

4. The display device with adjustable viewing angle according to claim 3, wherein the multi-link mechanism comprises a head link and a tail link, one end of the head link is disposed on the base portion by a first adjusting device, and the other end of the head link is movably connected to one end of the tail link, and the other end of the tail link is provided with the display device by a second adjusting device.

5. The display device with adjustable viewing angle according to claim 4, wherein the other end of the first adjusting device or the head link is connected to one end of the tail link by a hinge structure.

6. The display device with adjustable viewing angle according to claim 3, wherein the second adjusting device adopts a ball shaft structure.

7. The display device with adjustable viewing angle according to claim 6, wherein the ball shaft structure is a universal ball shaft structure.

8. The display device with adjustable viewing angle according to claim 4, wherein the head link is connected with the tail link through a link or a link group.

9. The display device with adjustable viewing angle according to claim 1, wherein a control button is disposed at the multi-link mechanism or at the display device.

10. The display device with adjustable viewing angle according to claim 3, wherein the device further comprises a thermal imager, and the base portion is disposed at the thermal imager.

11. The display device with adjustable viewing angle according to claim 3, wherein the device further comprises a spectacle frame, and the base portion is disposed at the spectacle frame.

12. The display device with adjustable viewing angle according to claim 3, wherein the base portion is provided with a snapping port.

13. The display device with adjustable viewing angle according to claim 10 or claim 11, wherein the base portion is connected to the thermal imager or the spectrum frame through a snap structure.

14. The display device with adjustable viewing angle according to claim 3, wherein the device further comprises an accommodating unit, and the base portion is disposed in the accommodating unit.

15. The display device with adjustable viewing angle according to claim 14, wherein the accommodating unit comprises an accommodating box, a baffle assembly disposed in the accommodating box, the baffle assembly comprises a top bead spring and a latching top bead disposed at the top of the top bead spring, and the multi-link mechanism cooperated therewith is provided with a card slot, and when accommodating, the latching top bead is snapped into the card slot.

16. The display device with adjustable viewing angle according to claim 15, wherein the accommodating unit further comprises a dialing component disposed on one side of the accommodating box, the dialing component comprises a dialing hand, a recovering spring, and a thimble, and the accommodating box is provided with a hole through which the thimble can pass, when dialing the dialing hand, the thimble passes through the hole of the accommodating box and then withstands the multi-link mechanism, so that the multi-link mechanism overcomes the elastic force of the latching top bead and then slides the latching top bead out of the card slot; after releasing the dialing hand, the recovering spring returns the dialing hand.

17. The display device with adjustable viewing angle according to claim 4, wherein a friction layer is provided on the surface of the tail link.

18. The display device with adjustable viewing angle according to claim 14, wherein a buffering component is disposed inside the accommodating unit.

19. The display device with adjustable viewing angle according to claim 4, wherein the device further comprises an accommodating groove, and the multi-link mechanism is accommodated in the accommodating groove.

20. The display device with adjustable viewing angle according to claim 14, wherein the accommodating unit is provided with a snap structure.
